(19) Europäisches Patentamt
European Patent Office
Office européen des brevets

(11) EP 3 901 201 B1

(12) EUROPÄISCHE PATENTSCHRIFT

(45) Veröffentlichungstag und Bekanntmachung des Hinweises auf die Patenterteilung:
**15.10.2025 Patentblatt 2025/42**

(21) Anmeldenummer: **21169082.1**

(22) Anmeldetag: **19.04.2021**

(51) Internationale Patentklassifikation (IPC):
***C08J 7/043*** *(2020.01)* ***B32B 27/36*** *(2006.01)*

(52) Gemeinsame Patentklassifikation (CPC):
**C08J 7/043; B32B 27/08; B32B 27/36; C08J 7/0423; C08J 7/0427;** B32B 2255/10; B32B 2255/26; B32B 2307/75; C08J 2367/02; C08J 2467/02

(54) **BIAXIAL ORIENTIERTE, EIN- ODER MEHRSCHICHTIGE POLYESTERFOLIE MIT EINER HAFTVERMITTLUNGS-BESCHICHTUNG BASIEREND AUF EINEM CO-POLYESTER UND EINER VERANKERUNGSKOMPONENTE**

BIAXIALLY ORIENTED SINGLE- OR MULTILAYER POLYESTER FILM HAVING AN ADHESIVE RELEASE COATING BASED ON A CO-POLYESTER AND AN ANCHORING COMPONENT

FEUILLE POLYESTER MONOCOUCHE OU MULTICOUCHE À ORIENTATION BIAXIALE DOTÉE D’UN REVÊTEMENT ADHÉSIF À BASE DE CO-POLYESTER ET D’UN COMPOSANT D’ANCRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2020 DE 102020205192**

(43) Veröffentlichungstag der Anmeldung:
**27.10.2021 Patentblatt 2021/43**

(73) Patentinhaber: **Mitsubishi Polyester Film GmbH**
**65203 Wiesbaden (DE)**

(72) Erfinder:
- **Bartsch, Stefan**
  **55294 Bodenheim (DE)**
- **Kliesch, Holger**
  **65462 Ginsheim (DE)**
- **Fischer, Viktor**
  **68723 Oftersheim (DE)**
- **Rentzsch, Tobias**
  **61350 Bad Homburg (DE)**

(74) Vertreter: **Schweitzer, Klaus**
**Dr. Müller Patentanwälte**
**Mühlstraße 9A**
**65597 Hünfelden (DE)**

(56) Entgegenhaltungen:
**EP-A1- 0 322 529 DE-A1- 10 035 327**

EP 3 901 201 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Gebiet der Erfindung

Die Erfindung betrifft eine ein- oder mehrschichtige, biaxial orientierte Polyesterfolie welche mindestens einseitig eine inline aufgebrachte Haftvermittlungsbeschichtung aufweist, welche aus mindestens einem Co-polyester und mindestens einer Verankerungskomponente gebildet wird. Die erfindungsgemäße Folie eignet sich hervorragend für die Bedruckung mit verschiedenen Druckfarben, insbesondere UV-Druckfarben

### Hintergrund

Polyesterfolien werden in sehr vielen verschiedenen Bereichen eingesetzt. Häufig wird ihre Oberfläche dabei mit anderen Materialien beschichtet. Damit diese Beschichtung gelingt, muss die Oberfläche einerseits mit dem Beschichtungsmaterial benetzbar sein und zum anderen muss das Beschichtungsmaterial anschließend gut auf der Polyesterunterlage haften. Teilweise gelingt dies direkt auf der Oberfläche der Polyesterfolie, oder durch Vorbehandlung der Oberfläche mittels Corona oder Plasmabehandlung. Zielgerichteter kann man die Oberflächeneigenschaften der Polyesterfolien durch chemische Vorbehandlung mittels einer Beschichtung verändern, die im Herstellungsprozess der Polyesterfolie selbst aufgebracht wird. Diese Beschichtung wirkt dann als Haftvermittlungsschicht zwischen der eigentlichen Polyesterfolie und dem eigentlichen Beschichtungsmaterial wie z.B. dem Dekordruck.

### Stand der Technik

Haftvermittelnd beschichtete Polyesterfolien sind hinreichend beschrieben, siehe z.B. DE 10035327 A1 und EP 0322529 A1.

Auch Copolyesterbeschichtungen sind als Haftvermittlungsschichten beschrieben, siehe z.B. EP-A 0 144 878. Die in EP-A 0 144 878 beschriebenen Copolyesterschichten sind jedoch feuchtigkeitsempfindlich und sehr leicht abwaschbar. Insbesondere wenn die nachfolgenden Prozessschritte mit wässrigen Medien arbeiten (z.B. Druckfarben oder Beschichtungsdispersionen) ist die Haftung oft nicht gut. Die Feuchtigkeitsempfindlichkeit dieser Schichten ist ebenfalls bekannt s. z.B. https://www.eastman.com/Literature Center/P/POLEUCOAT002.pdf.

Eine bekannte Methode, um die Haftung von Schichten auf der Unterlage zu verbessern und gleichzeitig ihre Lösemittelbeständigkeit zu erhöhen ist das Einbringen eines Vernetzers, der sowohl mit der Unterlage (hier die Polyesterfolie), als auch mit dem Vernetzungsmedium reagiert. Gut mit Polyestern reagieren Epoxide und die Vernetzung von Sulfo-Copolyestern mit Epoxiden ist z.B. in US-A 5,350,601 beschrieben. Der Nachteil solcher Epoxyverbindungen ist aber, dass diese im Verdacht stehen genotoxisch zu sein und die Produktion daher mit Risiken verbunden ist, aber insbesondere auch der Einsatz einer Beschichtung mit solchen Komponenten in Lebensmittelkontaktanwendungen verboten ist.

Neben der Vermeidung gesundheitlicher Risiken in der Produktion, ist für die wirtschaftliche Herstellbarkeit der Folie die direkte Wiederverwendbarkeit von in der Produktion anfallenden unverkäuflichen Folienresten entscheidend. Diese werden gesammelt, gehäckselt und entweder als Häcksel oder nach vorheriger Extrusion und Granulierung als Regenerat dem Prozess erneut zugeführt. Dies darf nicht zur Gelbildung oder zur Farbveränderung der Folie führen.

Weiterhin ist es für die genannten Anwendungen von hoher Bedeutung, dass die Beschichtung weitgehend defektfrei, also frei von Streifen und größeren Einschlüssen ist, da diese das Druckbild stören würden, oder z.B. in einer Metallschicht sofort als visuell störend empfunden würden.

### Aufgabe

Die Polyesterfolien gemäß dem Stand der Technik sind nachteilig, weil sie entweder keine ausreichende Haftung der Copolyester-Haftvermittlungsbeschichtung auf dem Polyester oder/und zum Zielbeschichtungsmedium aufweisen, oder/und Komponenten enthalten, die einen Einsatz z.B. in Lebensmittelkontaktanwendungen unmöglich machen, bzw. die wirtschaftliche Herstellbarkeit dadurch reduzieren, dass spezielle Schutzmaßnahmen in der Produktion getroffen werden müssen. Aufgabe der vorliegenden Erfindung war es dementsprechend, eine Polyesterfolie zur Verfügung zu stellen, die eine copolyesterhaltige Beschichtung aufweist, die eine gute Haftung zu Druckfarben, insbesondere UV-Druckfarben besitzt, und die auch unter feuchten Bedingungen Bestand hat. Die Polyesterfolie soll sich zudem wirtschaftlich herstellen lassen. Insbesondere soll die Folie frei von Epoxyfunktion tragenden Komponenten sein, die einem Einsatz in Lebensmittelkontaktanwendungen im Wege stehen würden.

### Lösung der Aufgabe

Gelöst wird die Aufgabe durch eine mehrschichtige Polyesterfolie gemäß Anspruch 1.

### Detailbeschreibung

Die Gesamtfoliendicke beträgt mindestens 4 μm und maximal 500 μm. Bevorzugt liegt die Foliendicke bei mindestens 10 und maximal 250 μm und idealerweise bei mindestens 11,5 μm und maximal 125 μm. Liegt die Foliendicke unter 4 μm, so reicht die mechanische Festigkeit der Folie nicht mehr aus, um sich mit guter Qualität bedrucken zu lassen. Oberhalb von 500 μm wird die Folie zu steif, um sich mit guter Qualität inline beschichten zu lassen. Bereits oberhalb von 250μm Foliendicke nimmt die Beschichtungsqualität infolge der hohen Foliensteifigkeit sichtbar ab, was sich z.B. in Form von unbeschichteten Stellen, die optisch als Flecken erkennbar sind, äußert.

Die Folie weist eine Basisschicht B auf. Einschichtige Folien bestehen nur aus dieser Basisschicht B. Bei einer mehrschichtigen Ausführungsform besteht die Folie aus der (d.h. einer) Basisschicht B und mindestens einer weiteren Schicht, die je nach Positionierung in der Folie als Zwischenschicht (mindestens jeweils eine weitere Schicht befindet sich dann auf jeder der beiden Oberflächen) oder Deckschicht (die Schicht bildet eine Außenschicht der Folie) bezeichnet wird. Bei der mehrschichtigen Ausführung ist die Dicke der Basisschicht B mindestens genauso groß wie die Summe der übrigen Schichtdicken. Bevorzugt liegt die Dicke der Basisschicht in mehrschichtigen Ausführungsformen bei mindestens 55 % der Gesamtfoliendicke und idealerweise bei mindestens 63 % der Gesamtfoliendicke. Wenn die Deckschichten zu dick werden, sinkt die Wirtschaftlichkeit, da der maximal einsetzbare Regeneratanteil ebenfalls sinkt. Aus Gründen der Eigenschaftssicherung, sollten Regenerate (rückgeführte Folienreste aus der Folienproduktion) nur der Basis zugeführt werden. Bei zu geringer Basisschichtdicke im Vergleich zur Gesamtdicke müsste dieser Basisschicht dann prozentual übermäßig Regenerat zugeführt werden, um den Regeneratkreislauf zu schließen. Dies kann dann auch über die Basisschicht die Eigenschaften wie z.B. Farbe und Transparenz der Folie negativ beeinflussen. Zudem enthalten Deckschichten in der Regel Partikel zur Verbesserung der Schlupfeigenschaften (Verbesserung der Wickelbarkeit). Diese Partikel führen in dicken Deckschichten zu einem Transparenzverlust und zu einer Trübung durch Rückstreuung. Insbesondere in graphischen Anwendungen - wie der vorliegenden Anwendung - sind aber Folien mit geringer Trübung und hoher Transparenz bevorzugt, was durch zu viele Partikel negativ beeinflusst wird.

Die Basisschicht B besteht mindestens zu 70 Gew.-% aus einem thermoplastischen Polyester, die restlichen Bestandteile werden durch Additive wie UV-Stabilisatoren, Partikel, Flammschutzmittel, Polyolefine, Cycloolefin-Copolymere (COC's) und sonstige Additive und/oder zu Polyester kompatiblen Polymeren, wie z.B. Polyamide gebildet. Erfindungsgemäß sind die sonstigen Additive und/oder zu Polyester kompatiblen Polymere (wie z.B. Polyamide) zu ≤ 20 Gew.-%, bevorzugt zu ≤ 2 Gew.-% und besonders bevorzugt gar nicht in der Basisschicht B enthalten. Der Einsatz von sonstigen Additiven und/oder Polymeren kann bei der Rückführung des Regenerats im Folienherstellungsprozess zu einer unerwünschten Gelbfärbung der Folie führen, wodurch der Regeneratanteil reduziert werden muss und somit die Wirtschaftlichkeit des Prozesses herabgesetzt wird. Weiterhin kann der Einsatz von sonstigen Additiven zu einer Verschlechterung der mechanischen Eigenschaften der Folie führen.

Als geeignete thermoplastische Polyester haben sich unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), 2,5-Furandicarbonsäure und Ethylenglykol, sowie aus beliebigen Mischungen der genannten Carbonsäuren und Diole erwiesen. Bevorzugt sind Polyester, die zu mindestens 75 Mol-%, bevorzugt mindestens 90 Mol-% und besonders bevorzugt zu mindestens 92 Mol-% aus Ethylenglykol- und Terephthalsäure-Einheiten bestehen. Der Einsatz von Naphthalin-2,6-dicarbonsäure hat gegenüber dem Einsatz von Terephthalsäure keine Vorteile, so dass, bedingt durch den höheren Preis von Naphthalin-2,6-dicarbonsäure, üblicherweise auf diese verzichtet wird. Auch 2,5-Furandicarbonsäure kommt aufgrund des höheren Preises in der Regel nicht zum Einsatz. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist, Cyclohexandimethanol, Butandiol, Propandiol, etc. Geeignete andere Dicarbonsäuren sind z.B. Isophthalsäure, Adipinsäure etc.

Ein Polyester gemäß dieser vorstehenden Beschreibung stellt den Hauptbestandteil, d.h. mindestens 70 Gew.-%, der Basisschicht B und auch den Hauptbestandteil, d.h. mindestens 70 Gew.-%, der übrigen Schichten der Folie dar.

Die erfindungsgemäße Folie hat einen SV-Wert von >600, bevorzugt von >650, und besonders bevorzugt von >700. Der SV-Wert der Folie ist dabei <950 und bevorzugt <850. Liegt der SV-Wert unterhalb von 600, so wird die Folie schon bei der Herstellung so brüchig, dass es zu häufigen Abrissen kommt. Zudem kommt es in den Endanwendungen zu einem schnelleren weiteren Viskositätsverlust unter Verlust der Flexibilität der Folien mit Bruchfolge. Außerdem werden die weiter unten genannten mechanischen Festigkeiten bei geringerem SV-Wert nicht mehr sicher erreicht.

Wenn die Folie einen höheren SV als 950 aufweisen soll, dann müssten die zur Folienproduktion eingesetzten Polymere einen SV-Wert von mindestens 950 haben. Diese würden dann jedoch in der Schmelze im Extruder so zäh

bleiben, dass übermäßig hohe Ströme beim Betrieb der Extruder-Elektromotoren auftreten und es zu Druckschwankungen in der Extrusion kommen würde, was zu einer schlechten Produktivität führen würde.

Der SV-Wert der Folie hängt vom SV-Wert der eingesetzten Rohstoffe, sowie den gewählten Prozessbedingungen ab. So bewirkt die Extrusion der Rohstoffe infolge der mechanischen Beanspruchung (durch Scherung) sowie temperaturbedingt eine Verringerung des SV-Wertes. Um den SV-Wert der Folie einzustellen muss also durch Einsatz von Rohstoffen mit entsprechend höherem SV-Wert der extrusionsbedingte SV-Abbau ausgeglichen werden. Das Ausmaß des extrusionsbedingten SV-Abbaus ist dabei eine Maschinenspezifische Variable, die für jede Folienproduktionsanlage separat herausgefunden werden muss.

Werden mehrere Rohstoffe mit unterschiedlichem SV-Wert eingesetzt, so kann für die Rohstoffmischung ein gemittelter SV-Wert angenommen werden. Der gemittelte SV-Wert ergibt sich als Summe der nach ihrem Massenanteil ($w_i$) gewichteten SV-Werte der Rohstoffkomponenten ($SV_i$):

$$SV = \sum_i (SV_i \cdot w_i)$$

Weißfärbende, jedoch mit dem Hauptbestandteil Polyester inkompatible Polymere, wie Polypropylen, Cycloolefincopolymere (COC's), Polyethylen, unvernetztes Polystyrol etc. sind im Sinne der Erfindung zu weniger als 0,1 Gew.-% (bezogen auf das Gewicht der Folie) und idealerweise überhaupt nicht (zu 0 Gew.-%) enthalten, da diese die Transparenz stark senken, das Brandverhalten negativ beeinflussen und unter Bedingungen der Regenerierung (Herstellung und Rückführung des Regenerats) zu starker Vergilbung neigen, was die Wirtschaftlichkeit deutlich verschlechtert.

Basis- und Deckschicht(en) können Partikel zur Verbesserung der Wickelbarkeit enthalten. Solche anorganischen oder organischen Partikel sind z. B. Kalziumcarbonat, Apatit, Siliziumdioxide, Aluminiumoxid, vernetztes Polystyrol, vernetztes Polymethylmethacrylat (PMMA), Zeolithe und andere Silikate wie Aluminiumsilikate, oder auch Weißpigmente wie $TiO_2$ oder $BaSO_4$. Diese Partikel werden bevorzugt den Deckschichten zur Verbesserung der Wickelbarkeit der Folie zugegeben. In einer bevorzugten transparenten Ausführungsform, ist die Verwendung von Siliziumdioxid-basierten Partikeln bevorzugt, da diese wenig Transparenz-reduzierend wirken. Der Anteil dieser oder anderer Partikel beträgt in einer bevorzugten transparenten Ausführungsform in keiner Schicht mehr als 3 Gew.-% und liegt bevorzugt bei unter 1 Gew.-% und besonders bevorzugt bei unter 0,2 Gew.-% in jeder Schicht (jeweils bezogen auf das Gesamtgewicht der betreffenden Schicht). Diese Partikel werden im Fall einer mehrschichtigen Ausführungsform bevorzugt nur einer oder beiden Deckschichten zugesetzt und gelangen somit nur zu einem geringen Anteil über das Regenerat in die Basisschicht. So wird eine minimale Reduktion der Transparenz durch die für die Wicklung benötigten Partikel erreicht. Bevorzugt enthält mindestens eine Außenschicht mindestens 0,07 Gew.-% dieser Partikel.

In weiteren bevorzugten Ausführungsformen ist die Folie weiß. In diesen Ausführungsformen enthält die Folie mindestens ein Weißpigment, bevorzugt Titandioxid oder Bariumsulfat. Der Gehalt an Weißpigment liegt dabei bezogen auf das Gesamtgewicht der Folie bei mindestens 1 Gew.-%, bevorzugt bei mindestens 3 Gew.-% und besonders bevorzugt bei mindestens 5 Gew.-%. Der Anteil an Weißpigment liegt bei < 38 Gew.-% und bevorzugt bei < 20 Gew.-% und idealerweise bei < 15 Gew.-%. Je höher der Anteil an Weißpigment, desto deckender weiß ist die Folie, aber desto geringer wird auch die Produktivität, da es zu vermehrten Folienabrissen im Produktionsprozess kommt.

In einer weiteren bevorzugten Ausführungsform ist die Folie auf mindestens einer Seite matt. In diesen Fällen enthält die Folie ein anorganisches und/oder organisches Partikelsystem. Ohne hierauf beschränkt zu sein, finden sich Beispiele hierfür in EP-A 1 197 327. Auch die Verwendung miteinander inkompatibler Polymere zur Erzeugung matter Oberflächen ist möglich.

**Beschichtung**

Die erfindungsgemäße Folie enthält mindestens einseitig eine Haftvermittlungsbeschichtung. Diese Beschichtung wird bevorzugt inline aufgebracht. Inline heißt, dass die Beschichtung im Herstellungsprozess der Polyesterfolie vor dem ersten Aufrollen aufgebracht wird. Die Beschichtung kann auch offline aufgebracht werden, da hierfür aber ein zusätzlicher Ab- und Aufwickelschritt nötig ist, ist dies in der Regel wirtschaftlich nicht sinnvoll.

Die Beschichtung der gebrauchsfertigen Folie weist eine Dicke von 5 - 170 nm auf. Bevorzugt liegt die Dicke bei 10 - 130 nm und idealerweise bei 20 - 110 nm. Je dicker die Beschichtung in diesem erfindungsgemäßen Bereich bis etwa 50 nm wird, desto besser ist im Regelfall die Haftvermittlungswirkung. Schichtdicken größer als 50nm sind möglich, werden jedoch nicht mehr im selben Maß von einer Erhöhung der Haftvermittlungswirkung begleitet, und bieten daher kaum Vorteile gegenüber 50nm. Je dicker die Beschichtung wird, desto deutlicher treten auch Beschichtungsunregelmäßigkeiten hervor. Ab 170 nm ist eine defektfreie Aufbringung inline nicht mehr möglich.

Die Beschichtung besteht im Wesentlichen aus einer Copolyesterkomponente und einer Silankomponente. Es

wird vermutet, dass die Haftungsvermittlung hauptsächlich auf die Copolyesterkomponente zurück zu führen ist, und durch die Silanverbindung eine Vernetzung des Copolyesters zum Polyestersubstrat bewirkt wird.

Die in US-A 5,350,601 beschriebenen Epoxysilane (z.B. (3-Glycidyloxypropyl)-trimethoxysilane), die eine gute Verankerung der Beschichtung zur Folienoberfläche ermöglichen, scheiden aus Gründen der Toxizität aus. Anderen Silanen, mit nicht-Epoxy Funktionalisierung, wurde in US-A 5,350,601 hingegen eine nur unzureichende Verankerungswirkung attestiert. Auch in der Schrift "Geniosil - Organofunktionelle Silane von Wacker" (abgerufen 2018 unter https://www.wacker.com/cms/media/publications/downloads/6085_DE.pdf) zeichnet sich kein offensichtlicher Lösungsweg ab um Polyester zu vernetzen, wenn Epoxysilane nicht in Frage kommen.

Entgegen der Erwartung zeigte sich überraschend, dass eine engere Auswahl an Silanen mit Vinylgruppenfunktionalisierung, oder weniger bevorzugt Methacrylgruppenfunktionalisierung, dennoch eine sehr gute Verankerungswirkung der Copolyesterhaltigen Beschichtungskomponente gegenüber dem Polyesterfoliensubstrat ermöglicht.

Es wird vermutet, dass die Alkoxygrupen, oder weniger bevorzugt Acetoxygruppen, nach Hydrolyse im wässrigen Dispersionsmedium eine Kondensationsreaktion mit endständigen Hydroxylgruppen des Copolyesters oder des Polyesterfoliensubstrates eingehen. Offenbar begünstigt die Vinylgruppenfunktion die weitere Vernetzung der Silane untereinander, in einem ähnlichen Ausmaß wie Epoxyfunktionen es vermögen.

Insbesondere Ethoxysilane mit kurzkettiger Vinylfunktionalisierung scheinen besonders geeignet, hinsichtlich Gelbildungsverhalten in der wässrigen Beschichtungsdispersion und Verankerungsfunktion auf dem Foliensubstrat.

**Copolyester der Beschichtung**

Die Copolyesterkomponente in der Beschichtung ist das Produkt einer Polykondensation aus Dicarbonsäure- und Dioleinheiten, wobei insbesondere für den Dicarbonsäureanteil verschiedene Monomere möglich sind, wie bspw. Terephthalsäure und isophthalsäure.

Ein (Homo)-Polyester ist aus einer Dicarbonsäure-Einheit und einer Diol-Einheit aufgebaut. Ein Copolyester ist aus mindestens zwei verschiedenen Dicarbonsäure-Einheiten und/oder mindestens zwei verschiedenen Diol-Einheiten aufgebaut. Der Copolyester in der Beschichtung enthält im Dicarbonsäureteil neben nicht-Sulfonatgruppen-tragenden Monomeren mindestens ein Sulfonat-Gruppen tragendes Monomer. Geeignete Sulfonatgruppen tragende Monomere sind in EP-A 0 144 878 beschrieben. Bevorzugt sind jedoch Salze der 5-Sulfoisophthalsäure. Das Gegenion ist von geringerer Bedeutung, ist jedoch im Regelfall Natrium oder Wasserstoff. 5-Sulfoisophthalsäure (Gegenion = $H^+$) lässt sich mit den besten Ausbeuten in der Polymerisation einsetzen und führt zu thermisch stabilen Polymeren, die im Herstellungsprozess der Folie nicht zu thermischer Zersetzung führen. Weitere geeignete Dicarbonsäuren ohne Sulfonatgruppen können ebenfalls EP-A 0 144 878 entnommen werden, bevorzugt sind aber u.a. aus den bereits für die 5-Sulfoisophthalsäure (5-SIPA) genannten Gründen Terephthalsäure und Isophthalsäure. Besonders bevorzugt ist Isophthalsäure, da die Verwendung von Isophthalsäure zu einer besonders guten Wasserlöslichkeit der resultierenden Polymere führt, was für die Herstellung der Beschichtungsdispersionen von Vorteil ist. Der Anteil von Isophthalsäure an den nicht Sulfonatgruppen tragenden Monomer-Einheiten in dem Dicarbonsäureteil liegt daher bevorzugt bei größer 50 Mol-% und besonders bevorzugt bei größer 75 Mol-% und idealerweise bei größer 85 Mol-%. Der Anteil der Sulfonatgruppen tragende Monomere an dem Dicarbonsäureteil liegt zwischen 2 und 50 Mol-%, bevorzugt zwischen 6 und 30 Mol-% und idealerweise zwischen 8 und 15 Mol-%. Unterhalb von 2 Mol-% sind Polymere nicht mehr ausreichend wasserlöslich und unterhalb von 6 Mol-% nur noch schlecht wasserlöslich (die Dispersionen müssten geheizt werden). Oberhalb von 15 Mol-% nimmt die Feuchteempfindlichkeit der Beschichtung deutlich zu. Oberhalb von 30 Mol-% sind die Polymere darüber hinaus nur noch mit geringen Ausbeuten herstellbar.

Auch die geeigneten Diole können EP-A 0 144 878 entnommen werden. Bevorzugt werden Ethylenglykol, Diethylenglykol (DEG), Polyethylenglykol (PEG), Propandiol, oder 1,4-Cyclohexandimethanol (CHDM) verwendet. Besonders bevorzugt ist Ethylenglykol (EG), da sich hiermit ein thermisch besonders stabiles Polymer ergibt und dieses aufgrund seiner breiten Verwendung in der Industrie den geringsten Preis aufweist.

Solche Polymere bzw. deren Dispersionen sind beispielsweise unter dem Markennamen Eastek® von Eastman Chemical (USA) kommerziell verfügbar.

Es hat sich weiterhin als günstig erwiesen, wenn die Glastemperatur der verwendeten Copolyester deutlich oberhalb der Raumtemperatur liegt, da die Haftung von darauf aufgebrachten Schichten dann keinen Änderungen unterliegt, wenn es während der Weiterverarbeitung oder der Lagerung zu kurzzeitigen Temperaturerlebnissen oberhalb der Raumtemperatur kommt. In einer bevorzugten Ausführungsform liegt die Glastemperatur der eingesetzten Copolyester daher bei > 35 °C, bevorzugt bei > 50 °C und idealerweise bei > 65 °C. Höhere Glastemperaturen sind erzielbar, wenn neben 5-SIPA, Isophthalsäure und Terephthalsäure noch weitere Dicarbonsäuren eingesetzt werden. Dabei führen jedoch aliphatische Dicarbonsäuren, wie z.B. Maleinsäure, zu einer Reduktion der Glastemperatur. Von Ethylenglykol verschiedene Diole sollten gemieden werden, insbesondere CHDM.

**Silan** der Beschichtung

Neben dem Copolyester enthält die Beschichtungsdispersion mindestens ein VinylGruppen (oder Methacrylgruppen) tragendes Silan. Dieses Silan folgt der allgemeinen Formel:

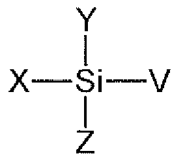

wobei

X, Y, Z unabhängig voneinander gleich oder verschieden sind und $CH_3$-$CO_2$- oder $(CH_3-(CH_2)_n)_m-CH_p$-O-bedeuten, mit

$$n = 0\text{-}4,$$

bevorzugt 0,

$$m = 3\text{-}p,$$

$$p = 0\text{-}2,$$

bevorzugt 2,
oder weniger bevorzugt
Z = $(CH_3-(CH_2)_f)_g-CH_h$ mit

$$f = 0\text{-}4$$

$$g = 3\text{-}h$$

$$h = 0\text{-}2$$

und
V ein mindestens eine Vinylgruppe tragender Rest ist, bevorzugt
V = $-(CH_2)_e-CH=CH_2$, mit

$$e = 0 - 4$$

und bevorzugt = 0,
weniger bevorzugt ist
V = $-(CH_2)_d-O-CO-C(CH_3)=CH_2$, mit

$$d = 1 - 4$$

Besonders bevorzugt ist X = Y = Z und entspricht besonders bevorzugt $CH_3CH_2$-O-, da dann bei der Hydrolysereaktion in wässriger Beschichtungsdispersion Ethanol abgespalten wird, welcher im Produktionsbetrieb leichter zu handhaben ist als beispielsweise Methanol, oder andere Alkohole. Natürlich kann - aus rein funktioneller Sicht - p auch 3 sein.

In einer weniger bevorzugten Ausführungsform, kann auch einer oder mehrere der Reste X,Y,Z ein Acetoxyrest -($CO_2$-$CH_3$) sein. Die übrigen nicht Acetoxyreste entsprechen dann den oben angegebenen Formeln für X - Z. Acetoxyreste führen jedoch insbesondere bei höheren Konzentrationen des Silans zu einer Gelbildung in der Beschichtungsdispersion, welche nach kurzer Zeit (< 6 h) bereits zu einer deutlichen Verschlechterung der Beschichtungsqualität führt.

Als besonders effektiv haben sich Vinylsilane erwiesen, bei denen die Vinylgruppe direkt an das Silizium gebunden ist. Befinden sich $CH_2$-Gruppen zwischen Si und Vinylfunktion, oder werden Methacrylsilane eingesetzt (weniger bevorzugte Varianten von V), so kommt es insbesondere bei höheren Konzentrationen des Silans zu einer Gelbildung in der Beschichtungsdispersion, welche nach kurzer Zeit (< 6 h) bereits zu einer deutlichen Verschlechterung der Beschichtungsqualität führt.

**Beschichtungsdispersion**

In einer bevorzugten Ausführungsform enthält die Beschichtungsdispersion Wasser als Dispergiermittel, sowie den Copolyester und das Silan in den folgenden Mengen:
Die Beschichtungsdispersion enthält mindestens 0,3 Gew.-%, bevorzugt mindestens 1 Gew.-% und besonders bevorzugt mindestens 2 Gew.-% der erfindungsgemäßen Copolyester. Der Gehalt an Copolyester liegt dabei bei maximal 9 Gew.-%, bevorzugt bei maximal 6 Gew.-% und idealerweise bei maximal 3,5 Gew.-%.

Die Beschichtungsdispersion enthält mindestens 0,3 Gew.-%, bevorzugt mindestens 0,6 Gew.-% und besonders bevorzugt mindestens 1 Gew.-% der erfindungsgemäßen Silane. Der Gehalt an Silan liegt dabei bei maximal 3 Gew.-%, bevorzugt bei maximal 2,3 Gew.-% und idealerweise bei maximal 1,8 Gew.-%.

Liegt der Gehalt an Silan oder Copolyester zu niedrig, so ergibt sich keine ideale Filmbildung, da zu viel Wasser verdampft werden muss. Liegt der Gehalt an Silan oder Copolyester zu hoch, so kommt es schneller zu einer Gelbildung und die Beschichtungsqualität verschlechtert sich. Innerhalb der oben genannten Grenzen werden die besten Resultate erzielt.

Der Gehalt an Silan in Gew.-% ist dabei bevorzugt kleiner als der des Copolyesters in Gew.-% und liegt besonders bevorzugt bei $\leq$ 75 % der Menge des Copolyesters in Gew.-%. Dies führt zu einer verringerten Vernetzungstendenz innerhalb der Beschichtungsdispersion und somit zu besserer Beschichtungsqualität auch bei längerer Produktionsdauer.

Die Beschichtungsdispersion kann weitere Komponenten wie Tenside zur Benetzungsverbesserung, Entschäumer, oder Partikel zur Verbesserung der Schlupfeigenschaften enthalten.

Die Beschichtungsdispersion enthält keine Epoxyfunktion-tragenden Komponenten, da diese bei der Produktion in die Raumluft gelangen könnten, bzw. Reste derselben später aus der Beschichtung migrieren können und so der Einsatz im Lebensmittelkontakt bzw. im Hautkontakt (z.B. medizinische Anwendungen) nicht möglich wäre.

**Verfahren zur Aufbringung der Beschichtung**

Gemäß der bevorzugten Ausführungsform wird die Haftvermittlungsbeschichtung In-Line beim Herstellungsprozess der biaxial orientierten Polyesterfolie aufgebracht. Dabei erfolgen der Auftrag der Beschichtung (einseitig) bzw. der Beschichtungen (beidseitig) nach der Längs- und vor der Querstreckung (oder weniger bevorzugt bei einer Simultanstreckanlage vor der Längs- und Querreckung). Um eine gute Benetzung der Polyesterfolie mit der Wasser-basierten Beschichtung zu erzielen, wird/werden die Folienoberflächeln bevorzugt zunächst coronabehandelt. Die Beschichtung(en) kann/können mit einem gängigen geeigneten Verfahren wie mit einem Schlitzgießer oder einem Sprühverfahren aufgetragen werden. Besonders bevorzugt ist die Aufbringung der Beschichtung(en) mittels des "Reverse gravure-roll coating"-Verfahrens, bei dem sich die Beschichtung(en) äußerst homogen auftragen lässt/lassen. Ebenfalls bevorzugt ist die Auftragung durch das Meyer-Rod-Verfahren, mit dem sich größere Beschichtungsstärken erzielen lassen. Die Beschichtungskomponenten können während der Trocknung und Verstreckung der Polyesterfolie und besonders bei der anschließenden Wärmebehandlung, die bis zu 240 °C erreichen kann, miteinander reagieren. Das In-Line-Verfahren ist hierbei wirtschaftlich attraktiver, da eine oder beide Beschichtung, gleichzeitig mit dem Herstellungsprozess der Folie aufgetragen werden können, so dass ein Prozessschritt (s.u.: Off-Line Verfahren) eingespart werden kann.

In einem alternativen, weniger bevorzugten Verfahren werden eine oder beide Beschichtungen durch Off-Line-Technologie aufgetragen. Dabei wird die Beschichtung gemäß der vorliegenden Erfindung mittels Off-Line-Technologie in einem zusätzlichen, der Folienherstellung nachgeordnetem Prozessschritt auf die entsprechende(n) Oberfläche(n) der Polyesterfolie aufgebracht, wobei beispielsweise eine Gravurwalze (forward gravure) verwendet wird. Die Höchstgrenzen der Beschichtungsdicke werden durch die Verfahrensbedingungen und die Viskosität der Beschichtungsdispersion festgelegt und finden ihre Obergrenze in der Verarbeitbarkeit der Beschichtungsdispersion.

**Verfahren zur Folienherstellung**

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol.

Zur Folienherstellung verwendbare Polyester können SV-Werte in einem Bereich von bevorzugt 500 bis 1300

aufweisen. Entscheidend für die spätere Folienherstellung ist dabei nicht der SV-Wert einer einzelnen Rohstoffkomponente, sondern der über alle Rohstoffkomponenten der zur Extrusion vorgesehenen Mischung gemittelte SV-Wert. Dieser gemittelte SV-Wert ist erfindungsgemäß größer als 700, und bevorzugt größer als 750.

Die Partikel - sofern vorhanden - können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Bevorzugt kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.-% Polyester enthalten. Insbesondere ein $SiO_2$-Partikel enthaltendes Masterbatch sollte nicht mehr als 20 Gew.-%ig an $SiO_2$ sein (wg. der Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen, die Polyester vorher zu trocknen. Bei Verwendung eines Zweischneckenextruders mit Entgasungszone kann auf den Trocknungsschritt verzichtet werden.

Zunächst wird der Polyester bzw. die Polyestermischung der Schicht oder bei Mehrschichtfolien der einzelnen Schichten in Extrudern komprimiert und verflüssigt. Dann wird/werden die Schmelze/Schmelzen in einer Ein- bzw. Mehrschichtdüse zu einem flachen Schmelzefilm ausgeformt, durch eine Breitschlitzdüse gepresst und auf einer Kühlwalze und einer oder mehreren Abzugswalzen abgezogen, wobei der Schmelzefilm abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140 °C (Ende der Streckung) durchgeführt. Das Längsstreckverhältnis liegt im Bereich von 2,5:1 bis 4,5:1, bevorzugt von 2,8:1 bis 3,4:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4:1. Ein höheres Querstreckverhältnis als 5 führt zu einer deutlich verschlechterten Herstellbarkeit (Abrisse) und sollte daher bevorzugt vermieden werden. Zum Erreichen der gewünschten Folieneigenschaften hat es sich als vorteilhaft erwiesen, wenn die Strecktemperatur (in MD und TD) unter 125 °C und bevorzugt unter 118 °C liegt. Vor der Querstreckung schließt sich dann bevorzugt die In-Line-Beschichtung einer oder beider Oberfläche(n) der Folie nach den an sich bekannten Verfahren an. Bei der nachfolgenden Thermofixierung wird die Folie über eine Zeitdauer von etwa 0,1 bis 10 s unter mechanischer Spannung bei einer Temperatur von 150 bis 250 °C gehalten und zum Erreichen der bevorzugten Schrumpfwerte (s.u.) um mindestens 1 %, bevorzugt um mindestens 3 % und besonders bevorzugt um mindestens 4 % in Querrichtung relaxiert. Diese Relaxation findet bevorzugt in einem Temperaturbereich von 150 bis 190 °C statt. Zur Reduktion des Transparenzbows liegt die Temperatur im ersten Fixierfeld bevorzugt unter 220 °C und besonders bevorzugt unter 190 °C. Zudem sollten vorzugsweise aus dem gleichen Grund mindestens 1% bevorzugt mindestens 2% des Gesamtquerstreckverhältnisses im ersten Fixierfeld liegen, in dem üblicherweise nicht mehr gestreckt wird. Anschließend wird die Folie in üblicher Weise aufgewickelt.

Bei einer besonders wirtschaftlichen Herstellungsweise der Polyesterfolie kann das Verschnittmaterial (Regenerat) in einer Menge von bis zu 60 Gew.-%, bezogen auf das Gesamtgewicht der Folie, der Extrusion wieder zugeführt werden, ohne dass dabei die physikalischen Eigenschaften der Folie nennenswert negativ beeinflusst werden.

**Folieneigenschaften**

Die erfindungsgemäße Folie nach dem oben beschrieben Verfahren weist bevorzugt bei 150 °C einen Schrumpf in Längs- und Querrichtung von unter 5 %, bevorzugt unter 2 % und besonders bevorzugt von unter 1,5 % auf. Diese Folie weist weiterhin bei 100 °C eine Ausdehnung von weniger als 3 %, bevorzugt von weniger als 1 % und besonders bevorzugt von weniger als 0,3 % auf. Diese Formstabilität kann beispielsweise durch geeignete Relaxation der Folie vor dem Aufwickeln erhalten werden (s. Verfahrensbeschreibung). Diese Formstabilität ist wichtig, um bei der nachfolgenden Bedruckung, Beschichtung oder Metallisierung der Folie, bei der Temperaturen von > 100 °C auftreten können, eine Verschlechterung des Druckbildes, bzw. der Beschichtungsqualität zu vermeiden, welche im Falle einer Schrumpfung oder Ausdehnung der Folie entstehen können.

## Anwendung

Die erfindungsgemäßen Folien eignen sich hervorragend für die Bedruckung aus wässrigen und Lösemittelhaltigen Farbsystemen, insbesondere auch für die Bedruckung mit UV-Druckfarben. Letztere weisen eine besonders gute Haftung zur Basisfolie auf der erfindungsgemäßen Beschichtung auf. Weiterhin lassen sich die erfindungsgemäßen Folien sehr gut metallisieren und weisen eine sehr gute Metallhaftung auf. Kennzeichnend ist zudem, dass die Haftung auch nach Kontakt mit Wasser sehr gut bleibt.

## Analytik

Zur Charakterisierung der Rohstoffe und der Folien wurden die folgenden Messmethoden benutzt:

### SV-Wert (standard viscosity)

Die Standardviskosität in verdünnter Lösung (SV) wurde, angelehnt an DIN 53 728 Teil 3, in einem Ubbelohde Viskosimeter bei (25 ± 0,05)°C gemessen. Dichloressigsäure (DCE) wurde als Lösemittel verwendet. Die Konzentration des gelösten Polymers betrug 1 g Polymer / 100 ml reines Lösemittel. Die Auflösung des Polymers erfolgte 1 Stunde bei 60°C.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Die Methode eignet sich gleichermaßen zur Bestimmung von Polyesterrohstoff sowie von Polyesterfolie. Die Durchführung der Messung, inklusive Probenpräparation, ist unabhängig von der Probenform. Jedoch handelt es sich beim SV-Wert von Folie und beim SV-Wert von Rohstoff um verschiedene Eigenschaften, die zueinander nicht äquivalent sind, und getrennt voneinander zu betrachten sind.

### Schrumpf

Der thermische Schrumpf wurde an quadratischen Folienmustern mit einer Kantenlänge von 10 cm bestimmt. Die Proben wurden so ausgeschnitten, dass eine Kante parallel zur Maschinenrichtung und eine Kante senkrecht zur Maschinenrichtung verlief. Die Proben wurden genau ausgemessen (die Kantenlänge $L_0$ wurde für jede Maschinenrichtung TD und MD bestimmt, $L_{0\,TD}$ und $L_{0\,MD}$) und 15 min bei der angegeben Schrumpfungstemperatur (hier 150 °C) in einem Umlufttrockenschrank getempert. Die Proben wurden entnommen und bei Raumtemperatur genau ausgemessen (Kantenlänge $L_{TD}$ und $L_{MD}$). Der Schrumpf ergibt sich aus der Gleichung:

$$\text{Schrumpf [\%] MD} = 100 \bullet (L_{0\,MD} - L_{MD}) / L_{0\,MD}, \text{ bzw.}$$

$$\text{Schrumpf [\%] TD} = 100 \bullet (L_{0\,TD} - L_{TD}) / L_{0\,TD}$$

### Ausdehnung

Die thermische Ausdehnung wurde an quadratischen Folienmustern mit einer Kantenlänge von 10 cm bestimmt. Die Proben wurden genau ausgemessen (Kantenlänge $L_0$), 15 Minuten bei 100 °C in einem Umlufttrockenschrank getempert, und anschließend bei Raumtemperatur genau ausgemessen (Kantenlänge L). Die Ausdehnung ergibt sich aus der Gleichung:

$$\text{Ausdehnung [\%]} = 100 * (L - L_0) / L_0$$

und wurde in jeder Folienrichtung separat ermittelt.

### Beurteilung Beschichtungsqualität

Die Folie wird über die Produktionsbreite und eine Länge von mindestens 5 Metern visuell inspiziert. Hierzu wird die Folie aus verschiedenen Richtungen mit einer starken Lichtquelle angeleuchtet und von zwei Personen beurteilt, die die Folie aus verschiedenen Winkeln betrachten. Die Beschichtungsqualität wird mit den folgenden Noten bewertet:

1. Keine sichtbaren Defekte (Einschlüsse, Streifen, unbeschichtete Stellen)

2. Kleinere Einschlüsse (Gele etc.) gerade so sichtbar

3. Einzelne größere leicht erkennbare Einschlüsse oder/und Streifen kürzer 1 cm

4. Viele größere leicht erkennbare Einschlüsse oder/und Streifen länger 1 cm

5. Nahezu über die gesamte Folienbreite größere Einschlüsse oder/und Streifen länger 1 cm und/oder unbeschichtete Stellen > 1 $cm^2$

Ab Note 4 ist die Beschichtung kommerziell nicht mehr verwertbar.

Die Beschichtungsqualität wird beurteilt initial, also zu Produktionsbeginn und nach 3 Stunden Produktion. Nach 3 Stunden Produktion erhält man eine Information über die Stabilität der Beschichtungsdispersion bzw. ihre Tendenz Gele zu bilden.

**Messung Haftfestigkeit**

Die Haftfestigkeit auf der Folie wird für Druckfarben und Metallisierung mittels des Gitterschnittverfahrens in Anlehnung an EN ISO 2409 geprüft. Es wird ein Gitter aus 8 x 8 Linien im Abstand von je 2 mm in die Beschichtete Oberfläche geschnitten, wobei der Schnitt so tief ausgeführt wird, dass in die Polyesterfolienoberfläche hineingeschnitten wird, ohne die Folie jedoch zu durchtrennen. Anschließend wird über die Schnittfläche ein Klebeband (tesafilm® 4129 von Tesa SE Deutschland) geklebt und manuell ruckartig abgezogen.

Die Bewertung folgt dem folgenden Schema:

Kennwert 0: Vollkommen glatte Schnittränder. Keine abgeplatzten Quadrate im Gitterschnitt.

Kennwert 1: Kleine Absplitterungen in den Schnittpunkten der Gitterschnittlinien. Jedoch nicht mehr als 5 % der Gitterinnenflächen.

Kennwert 2: Absplitterungen entlang der Gitterschnittlinien und in den Schnittpunkten der Gitterschnittlinien. Jedoch nicht mehr als 15 % der Gitterinnenflächen.

Kennwert 3: Teilweise oder breite Absplitterungen entlang der Gitterschnittlinien und Absplitterung einiger Quadrate. Jedoch nicht größer als 35 % der Gitterinnenflächen.

Kennwert 4: Breite Absplitterungen längs der Gitterschnittlinien und Absplitterung einiger Quadrate. Jedoch nicht mehr als 65 % der Gitterinnenflächen.

Kennwert 5: Absplitterungen von mehr als 65 % der Gitterinnenflächen.

Kennwerte oberhalb von 2 sind für die meisten Anwendungen ungeeignet.

**Messung Haftfestigkeit nach Feuchteexposition**

Hierzu wird der Gitterschnitt wie bei "Messung Haftfestigkeit" beschrieben ausgeführt. Die Folie mit Schnitt wird anschließend 24 h in 25 °C warmem Wasser gelagert, dann entnommen und vorsichtig mit einem trockenen Papiertuch abgetrocknet. Anschließend wird wie bei "Messung Haftfestigkeit" beschrieben weiter verfahren und bewertet.

**Messung Haftfestigkeit nach Feuchteexposition und Wärme**

Hierzu wird der Gitterschnitt wie bei "Messung Haftfestigkeit" beschrieben ausgeführt. Die Folie mit Schnitt wird anschließend 24 h in 60 °C warmem Wasser gelagert, dann entnommen und vorsichtig mit einem trockenen Papiertuch abgetrocknet. Anschließend wird wie bei "Messung Haftfestigkeit" beschrieben weiter verfahren und bewertet.

**Bedruckung**

Die Folie wird im Offsetdruck mit UV-Druckfarben der Serie NewV poly der hubergroup Deutschland GmbH bedruckt und mittels Standard Quecksilber UV-Strahler gehärtet. Es wurden 3 mm breite Linien der Farben gelb, cyan, magenta und schwarz nebeneinander gedruckt.

**Metallisierung**

Die Folie wird im Vakuum mit Aluminium beschichtet, wobei die Optische Dichte der Folie anschließend 2 beträgt.

**Folienherstellung der Beispiele**

Für alle aufgeführten Beispiele wurde die Folie wie folgt hergestellt. Die nachstehenden Rohstoffe wurden in je einem Extruder pro Schicht bei 292°C aufgeschmolzen und durch eine dreischichtige Breitschlitzdüse nach elektrostatischer Anlegung auf eine auf 50°C temperierte Abzugswalze extrudiert. Die so erhaltene amorphe Vorfolie wurde dann zunächst längsgestreckt. Die längsgestreckte Folie wurde in einem Corona-Gerät coronabehandelt und danach durch Reversgravur-Beschichtung mit einer der nachstehenden Dispersionen inline beschichtet. Danach wurde die Folie quergestreckt, fixiert und aufgerollt. Die Bedingungen in den einzelnen Verfahrensschritten waren:

| | | | |
|---|---|---|---|
| Längsstreckung | Aufheiztemperatur | 75-115 | °C |
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1.Fixierteid) | 3,9 | |
| Fixierung | Temperatur | 237 - 150 | °C |
| | Dauer | 3 | s |
| | Relaxation in TD bei 200 - 150 °C | 5 | % |
| Fixierung | Temperatur 1. Fixierfeld | 170 | °C |

Zur Herstellung der Folie der Beispiele wurden folgende Ausgangsmaterialien verwendet:

PET1 = Polyethylenterephthalatrohstoff aus Ethylenglykol und Terephthalsäure mit einem SV Wert von 820.

PET2 = Polyethylenterephthalatrohstoff mit einem SV-Wert von 700 und 15 Gew.-% amorphem $SiO_2$, Typ Sylobloc 46 (Hersteller: Grace, Deutschland); mittlerer Partikeldurchmesser $d_{50}$ laut Datenblatt 3,6 - 4,2 µm. Das $SiO_2$ wurde in einem Zweischneckenextruder in das Polyethylenterephthalat eingearbeitet

Es wurde eine dreischichtige Folie der Dicke 36 µm hergestellt. Die Dicke der Deckschichten A und C betrug jeweils 1,5 µm. Die Polymermischung für die Deckschichten A und C war 99 % PET1 und 1% PET2. Die Basis B bestand aus 50 % PET1 und 50 % Regenerat.

Der Schrumpf der Folie betrug bei 150 °C 1,2 % in Längsrichtung und 0,1 % in Querrichtung.

**Zusammensetzung der Beschichtungsdispersion**

*Beschichtung 1:*

Folgende Zusammensetzung der Beschichtungslösung wurde verwendet

- 90,0 Gew.-% entionisiertes Wasser
- 10,0 Gew.-% Eastek™ 1400

Die einzelnen Komponenten wurden langsam unter Rühren in entionisiertes Wasser gegeben und vor Verwendung für mindestens 30 min gerührt.

Eastek 1400 ist eine kommerziell erhältliche Polymerdisperion von Eastman USA mit 30 % Polymeranteil. Der Polyester besteht in der Dicarbonsäurefraktion aus Sulfoisophthalsäure (5-SIPA). Glastemperatur Polymer 29 °C.

*Beschichtung 2:*

Folgende Zusammensetzung der Beschichtungslösung wurde verwendet

- 90,9 Gew.-% entionisiertes Wasser
- 9,1 Gew.-% Eastek™ 1100

Die einzelnen Komponenten wurden langsam unter Rühren in entionisiertes Wasser gegeben und vor Verwendung für mindestens 30 min gerührt.

Eastek 1100 ist eine kommerziell erhältliche Polymerdisperion mit 33 % Polymeranteil. Der Polyester besteht in der Dicarbonsäurefraktion aus Sulfoisophthalsäure (5-SIPA) und Isophthalsäure, wobei der Gehalt an Isophthalsäure größer ist als der von 5-SIPA. Glastemperatur Polymer 55 °C.

*Beschichtung 3:*

Folgende Zusammensetzung der Beschichtungslösung wurde verwendet

- 90,0 Gew.-% entionisiertes Wasser
- 10,0 Gew.-% Eastek™ 1200

Die einzelnen Komponenten wurden langsam unter Rühren in entionisiertes Wasser gegeben und vor Verwendung für mindestens 30 min gerührt.

Eastek 1200 ist eine kommerziell erhältliche Polymerdisperion mit 30 % Polymeranteil. Der Polyester besteht in der Dicarbonsäurefraktion aus Sulfoisophthalsäure (5-SIPA) und Isophthalsäure, wobei der Gehalt an Isophthalsäure sehr deutlich größer ist als der von 5-SIPA.

Glastemperatur Polymer 63 °C.

*Beschichtung 4:*

Folgende Zusammensetzung der Beschichtungslösung wurde verwendet

- 97 Gew.-% entionisiertes Wasser
- 3,0 Gew.-% Polyester aus Beispiel 1 aus EP-A 0 144 878

Die einzelnen Komponenten wurden langsam unter Rühren in entionisiertes Wasser gegeben und vor Verwendung für mindestens 30 min gerührt.

Der Polyester besteht in der Dicarbonsäurefraktion aus 10 Mol-% Sulfoisophthalsäure und 90 Mol-% Isophthalsäure, die Diolfraktion besteht aus Ethylenglykol, Glastemperatur Polymer 69 °C.

*Beschichtung 5:*

Folgende Zusammensetzung der Beschichtungslösung wurde verwendet

- 97 Gew.-% entionisiertes Wasser
- 3,0 Gew.-% Polyester aus Beispiel 4 aus EP-A 0 144 878

Die einzelnen Komponenten wurden langsam unter Rühren in entionisiertes Wasser gegeben und vor Verwendung für mindestens 30 min gerührt.

Der Polyester besteht in der Dicarbonsäurefraktion aus 10 Mol-% Sulfoisophthalsäure und 70 Mol-% Isophthalsäure und 20 Mol-% Malonsäure, die Diolfraktion besteht aus Ethylenglykol. Eine breite Glasstufe bei 20 °C.

*Beschichtung 6:*

Folgende Zusammensetzung der Beschichtungslösung wurde verwendet

- 88,5 Gew.-% entionisiertes Wasser
- 10,0 Gew.-% Eastek™ 1400
- 1,5 Gew.-% Geniosil™ GF56 von Wacker Chemie AG (Vinyltriethoxysilan)

Die einzelnen Komponenten wurden langsam unter Rühren in entionisiertes Wasser gegeben und vor Verwendung für mindestens 30 min gerührt.

*Beschichtung 7:*

Folgende Zusammensetzung der Beschichtungslösung wurde verwendet

- 89,4 Gew.-% entionisiertes Wasser
- 9,1 Gew.-% Eastek™ 1100
- 1,5 Gew.-% Geniosil™ GF56 (Vinyltriethoxysilan)

Die einzelnen Komponenten wurden langsam unter Rühren in entionisiertes Wasser gegeben und vor Verwendung für mindestens 30 min gerührt.

*Beschichtung 8:*

Folgende Zusammensetzung der Beschichtungslösung wurde verwendet

- 88,5 Gew.-% entionisiertes Wasser
- 10,0 Gew.-% Eastek™ 1200
- 1,5 Gew.-% Geniosil™ GF56 (Vinyltriethoxysilan)

Die einzelnen Komponenten wurden langsam unter Rühren in entionisiertes Wasser gegeben und vor Verwendung für mindestens 30 min gerührt.

*Beschichtung 9:*

Folgende Zusammensetzung der Beschichtungslösung wurde verwendet

- 95,5 Gew.-% entionisiertes Wasser
- 3,0 Gew.-% Polyester aus Beispiel 1 aus EP-A 0 144 878
- 1,5 Gew.-% Geniosil™ GF56 (Vinyltriethoxysilan)

Die einzelnen Komponenten wurden langsam unter Rühren in entionisiertes Wasser gegeben und vor Verwendung für mindestens 30 min gerührt.

*Beschichtung 10:*

Folgende Zusammensetzung der Beschichtungslösung wurde verwendet

- 95,5 Gew.-% entionisiertes Wasser
- 3,0 Gew.-% Polyester aus Beispiel 4 aus EP-A 0 144 878
- 1,5 Gew.-% Geniosil™ GF56 (Vinyltriethoxysilan)

Die einzelnen Komponenten wurden langsam unter Rühren in entionisiertes Wasser gegeben und vor Verwendung für mindestens 30 min gerührt.

*Beschichtung* 11:

Folgende Zusammensetzung der Beschichtungslösung wurde verwendet

- 95,35 Gew.-% entionisiertes Wasser
- 3,0 Gew.-% Polyester aus Beispiel 1 aus EP-A 0 144 878
- 1,65 Gew.-% Geniosil™ GF62 (Vinyltriacetoxysilan)

Die einzelnen Komponenten wurden langsam unter Rühren in entionisiertes Wasser gegeben und vor Verwendung für mindestens 30 min gerührt.

*Beschichtung 12:*

Folgende Zusammensetzung der Beschichtungslösung wurde verwendet

- 95,45 Gew.-% entionisiertes Wasser
- 3,0 Gew.-% Polyester aus Beispiel 1 aus EP-A 0 144 878
- 1,55 Gew.-% Geniosil™ XL 32 ((Methacryloxymethyl)-methyldimethoxysilan)

Die einzelnen Komponenten wurden langsam unter Rühren in entionisiertes Wasser gegeben und vor Verwendung für mindestens 30 min gerührt.

*Beschichtung 13:*

Folgende Zusammensetzung der Beschichtungslösung wurde verwendet

- 95,35 Gew.-% entionisiertes Wasser
- 3,0 Gew.-% Polyester aus Beispiel 1 aus EP-A 0 144 878
- 1,65 Gew.-% Z6040 from Dow Corning Corporation ((3-Glycidyloxypropyl)-trimethoxysilane))

Die einzelnen Komponenten wurden langsam unter Rühren in entionisiertes Wasser gegeben und vor Verwendung für mindestens 30 min gerührt.

Die Beschichtungsdispersion 13 enthält eine Gycidylkomponente und muss daher mit besonderer Vorsicht behandelt werden, um die Mitarbeiter nicht zu gefährden. Der in der Produktion zu betreibende Aufwand ist daher deutlich höher und die Wirtschaftlichkeit daher bei weitem geringer. Ein Einsatz in Lebensmittelkontaktanwendungen oder medizinischen Produkten, die mit der Haut in Berührung kommen ist ausgeschlossen. Diese Dispersion ist daher nicht im Sinne der Erfindung und dient nur zu Vergleichszwecken.

*Beschichtung 14:*

Folgende Zusammensetzung der Beschichtungslösung wurde verwendet

- 93,0 Gew.-% entionisiertes Wasser
- 3,0 Gew.-% Polyester aus Beispiel 1 aus EP-A 0 144 878
- 4,0 Gew.-% Geniosil™ GF56 (Vinyltriethoxysilan)

Die einzelnen Komponenten wurden langsam unter Rühren in entionisiertes Wasser gegeben und vor Verwendung für mindestens 30 min gerührt.

Wenn nicht anders beschrieben wird die Beschichtung im In-Line Prozess aufgetragen mittels des Reverse-Gravure Verfahrens aufgetragen. Die nachfolgende Tabelle 1 fasst die Rezepturen, Herstellbedingungen und resultierenden Folieneigenschaften zusammen:

Tabelle 1: Eigenschaften der Folien der Beispiele

| Beispiel | VB1 | VB2 | VB3 | VB4 | VB5 | VB6 | V87 | VB8 | VB9 | B1 | B2 | B3 | B4 | B5 | B6 | B7 | B8 |
|---|---|---|---|---|---|---|---|---|---|---|---|---|---|---|---|---|---|
| Beschichtungsdispersion | keine | 1 | 2 | 3 | 4 | 5 | 9 | 13 | 14 | 6 | 7 | 8 | 9 | 10 | 9 | 11 | 12 |
| Beschichtungsdicke | 0nm | 35 | 35 | 35 | 35 | 35 | 200 | 35 | 35 | 35 | 35 | 35 | 35 | 35 | 12 | 35 | 35 |
| Beschichtungsqualität initial | - | 2 | 1 | 1 | 1 | 1 | 3 | 1 | 2 | 2 | 1 | 1 | 1 | 1 | 1 | 1 | 1 |
| Beschichtungsqualität nach 3h | - | 3 | 1 | 1 | 1 | 1 | 4 | 2 | 4 | 3 | 1 | 1 | 1 | 1 | 1 | 1 | 3 |
| - Haftfestigkeit UV-Druck | 3 | 3 | 2 | 2 | 2 | 2 | 0 | 0 | 1 | 1 | 0 | 0 | 0 | 0 | 0 | 0 | 0 |
| Haftfestigkeit UV-Druck nach Feuchteexposition | 4 | 4 | 3 | 3 | 3 | 3 | 0 | 1 | 2 | 1 | 0 | 0 | 0 | 1 | 1 | 0 | 0 |
| Haftfestigkeit UV-Druck nach Wärme / Feuchteexposition | 5 | 5 | 5 | 4 | 3 | 5 | 1 | 2 | 2 | 2 | 2 | 1 | 0 | 2 | 1 | 0 | 1 |
| Haftfestigkeit Metallisierung | 2 | 1 | 1 | 1 | 1 | 1 | 1 | 1 | 1 | 1 | 1 | 1 | 1 | 1 | 1 | 1 | 1 |
| Haftfestigkeit Metallisierung nach Feuchteexposition | 3 | 3 | 3 | 2 | 2 | 3 | 1 | 1 | 1 | 1 | 1 | 1 | 1 | 1 | 1 | 1 | 1 |
| Haftfestigkeit Metallisierung nach Wärme / Feuchteexposition | 3 | 4 | 3 | 3 | 2 | 4 | 2 | 2 | 1 | 2 | 2 | 1 | 1 | 2 | 2 | 1 | 1 |

## Patentansprüche

1. Polyesterfolie, die mindestens einseitig mit einer Beschichtung versehen ist, wobei die Beschichtung das Trocknungsprodukt einer wässrigen Dispersion ist, deren Zusammensetzung neben Wasser mindestens eine Copolyesterkomponente und eine Silankomponente umfasst, wobei

    • die Copolyesterkomponente zu 3 bis 35 Mol-% aus einer Sulfonatgruppen tragenden Monomereinheit aufgebaut ist, und in der getrockneten Beschichtung zu einem Anteil von 40-85 Gew.-% vorhanden ist, und
    **dadurch gekennzeichnet ist, dass**
    • die Silankomponente Vinylgruppen oder Methacrylgruppen trägt, sowie Alkoxygruppen, und in der getrockneten Beschichtung zu 15-60 Gew.-% vorhanden ist; und
    • die Beschichtung eine Dicke von 5-170 nm aufweist; und
    • die Dispersion der Beschichtung 0,3 - 3 Gew.-% der Silankomponente enthält.

2. Polyesterfolie nach Anspruch 1, wobei die Folie mehrschichtig ist.

3. Polyesterfolie nach einem der Ansprüche 1 bis 2, wobei die wässrige Dispersion keine Epoxyfunktion-tragenden Komponenten enthält.

4. Polyesterfolie nach einem der Ansprüche 1 bis 3, wobei der Copolyester in der Beschichtung im Dicarbonsäureteil Einheiten enthält, die von 5-Sulfoisophthalsäure abgeleitet sind.

5. Polyesterfolie nach einem der Ansprüche 1 bis 4, wobei der Copolyester in der Beschichtung im Dicarbonsäureteil Einheiten enthält, die von Terephthalsäure und/oder Isophthalsäure abgeleitet sind.

6. Polyesterfolie nach einem der Ansprüche 1 bis 5, wobei die Glastemperatur des Copolyesters in der Beschichtung bei > 35 °C liegt.

7. Polyesterfolie nach einem der Ansprüche 1 bis 6, wobei das Vinylgruppen oder Methacrylgruppen tragende Silan die allgemeine Formel:

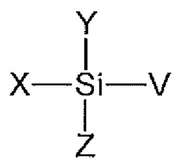

besitzt, wobei
X, Y, Z unabhängig voneinander gleich oder verschieden sind und $CH_3$-$CO_2$- oder $(CH_3$-$(CH_2)_n)_m$-$CH_p$-O- bedeuten, mit

$$n = 0\text{-}4,$$

$$m = 3\text{-}p,$$

$$p = 0\text{-}2$$

und
V eine mindestens eine Vinylgruppe-tragender Rest ist.

8. Polyesterfolie nach einem der Ansprüche 1 bis 6, wobei das Vinylgruppen oder Methacrylgruppen tragende Silan die allgemeine Formel:

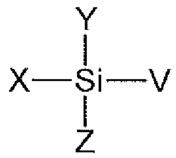

besitzt, wobei
X, Y, Z unabhängig voneinander gleich oder verschieden sind und $CH_3$-$CO_2$- oder $(CH_3-(CH_2)_n)_m-CH_p-O-$ bedeuten, mit

$$n = 0\text{-}4,$$

$$m = 3\text{-}p,$$

$$p = 0\text{-}3$$

und
V eine mindestens eine Vinylgruppe-tragender Rest ist.

**9.** Polyesterfolie nach einem der Ansprüche 1 bis 8, wobei die wässrige Dispersion mindestens 0,3 Gew.-% Silankomponente und/oder 0,3 Gew.-% Copolyesterkomponente enthält.

**10.** Polyesterfolie nach einem der Ansprüche 1 bis 9, wobei der Gehalt in Gew.-% an Silankomponente kleiner ist, als der der Copolyesterkomponente.

**11.** Verfahren zur Herstellung einer Polyesterfolie nach Anspruch 1, wobei der Polyester oder die Polyestermischung der Schicht oder bei Mehrschichtfolien der einzelnen Schichten in (einem) Extruder(n) komprimiert und verflüssigt wird, die entstandene(n) Schmelze/Schmelzen in einer Ein- oder Mehrschichtdüse zu einem flachen Schmelzefilm ausgeformt wird/werden, durch eine Breitschlitzdüse gepresst und auf einer Kühlwalze und einer oder mehreren Abzugswalzen abgezogen wird, der abgekühlte und verfestigte Schmelzefilm biaxial orientiert wird, und vor, während oder nach der biaxialen Orientierung In-Line mit einer wässrigen Dispersion beschichtet wird, wobei die Dispersion neben Wasser mindestens eine Copolyesterkomponente und eine Silankomponente umfasst, wobei

• die Copolyesterkomponente zu 3 bis 35 Mol-% aus einer Sulfonatgruppen tragenden Monomereinheit aufgebaut ist, und in der getrockneten Beschichtung zu einem Anteil von 40-85 Gew.-% vorhanden ist, **dadurch gekennzeichnet, dass**
• die Silankomponente Vinylgruppen oder Methacrylgruppen trägt, sowie Alkoxygruppen, und in der getrockneten Beschichtung zu 15-60 Gew.-% vorhanden ist,
und anschließend die beschichtete Folie thermofixiert, relaxiert und aufgerollt wird und
• die Beschichtung eine Dicke von 5-170 nm aufweist; und
• die Dispersion der Beschichtung 0,3 - 3 Gew.-% der Silankomponente enthält.

**12.** Verwendung einer Folie nach Anspruch 1 für die Bedruckung aus wässrigen und Lösemittel-haltigen Farbsystemen

**13.** Verwendung nach Anspruch 12 für die Bedruckung mit UV-Druckfarben.

**14.** Verwendung einer Folie nach Anspruch 1, zur Herstellung von metallisierten Folien.

## Claims

**1.** Polyester film provided with a coating at least on one side, wherein the coating is the drying product of an aqueous dispersion, the composition of which comprises not only water but also at least one copolyester component and one silane component, where

• the copolyester component is formed to an extent of 3 to 35 mol% of a monomer unit bearing sulfonate groups,

and is present in the dried coating in a proportion of 40-85% by weight, and
**characterized in that**
• the silane component bears vinyl groups or methacryloyl groups, and also alkoxy groups, and is present in the dried coating to an extent of 15-60% by weight; and
• the coating has a thickness of 5-170 nm; and
• the dispersion of the coating contains 0.3 - 3% by weight of the silane component.

**2.** Polyester film according to Claim 1, wherein the film is a multilayer film.

**3.** Polyester film according to either of Claims 1 and 2, wherein the aqueous dispersion does not contain any components bearing epoxy functions.

**4.** Polyester film according to any of Claims 1 to 3, wherein the copolyester in the coating contains units derived from 5-sulfoisophthalic acid in the dicarboxylic acid moiety.

**5.** Polyester film according to any of Claims 1 to 4, wherein the copolyester in the coating contains units derived from terephthalic acid and/or isophthalic acid in the dicarboxylic acid moiety.

**6.** Polyester film according to any of Claims 1 to 5, wherein the glass transition temperature of the copolyester in the coating is > 35°C.

**7.** Polyester film according to any of Claims 1 to 6, wherein the silane bearing vinyl groups or methacryloyl groups has the general formula:

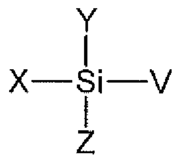

where

X, Y, Z are independently the same or different and are $CH_3$-$CO_2$- or $(CH_3\text{-}(CH_2)_n)_m\text{-}CH_p\text{-}O\text{-}$, with

$$n = 0\text{-}4,$$

$$m = 3\text{-}p,$$

$$p = 0\text{-}2$$

and
V is a radical bearing at least one vinyl group.

**8.** Polyester film according to any of Claims 1 to 6, wherein the silane bearing vinyl groups or methacryloyl groups has the general formula:

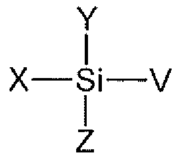

where

X, Y, Z are independently the same or different and are $CH_3$-$CO_2$- or $(CH_3\text{-}(CH_2)_n)_m\text{-}CH_p\text{-}O\text{-}$, with

$$n = 0\text{-}4,$$

$$m = 3\text{-}p,$$

$$p = 0\text{-}3$$

and
V is a radical bearing at least one vinyl group.

9. Polyester film according to any of Claims 1 to 8, wherein the aqueous dispersion contains at least 0.3% by weight of silane component and/or 0.3% by weight of copolyester component,

10. Polyester film according to any of Claims 1 to 9, wherein the content in % by weight of silane component is smaller than that of the copolyester component.

11. Process for producing a polyester film according to Claim 1, wherein the polyester or polyester mixture of the layer, or of the individual layers in the case of multilayer films, is compressed and liquefied in (an) extruder(s), the resultant melt(s) is/are formed in a single- or multilayer nozzle to a flat melt film, pushed through a slot die and drawn off on a chill roll and one or more draw rolls, and the cooled and consolidated melt film is biaxially oriented and, before, during or after the biaxial orientation, coated inline with an aqueous dispersion, wherein the dispersion comprises not only water but also at least one copolyester component and one silane component, where

    • the copolyester component is formed to an extent of 3 to 35 mol% of a monomer unit bearing sulfonate groups, and is present in the dried coating in a proportion of 40-85% by weight, **characterized in that**
    • the silane component bears vinyl groups or methacryloyl groups, and also alkoxy groups, and is present in the dried coating to an extent of 15-60% by weight,
    and then the coated film is heat-set, relaxed and rolled up, and
    • the coating has a thickness of 5-170 nm; and
    • the dispersion of the coating contains 0.3 - 3% by weight of the silane component.

12. Use of a film according to Claim 1 for printing from aqueous and solventborne ink systems.

13. Use according to Claim 12 for printing with UV printing inks.

14. Use of a film according to Claim 1 for production of metallized films.

## Revendications

1. Film de polyester, qui est pourvu sur au moins une face d'un revêtement, lequel revêtement est le produit de séchage d'une dispersion aqueuse, dont la composition comprend, outre l'eau, au moins un composant copolyester et un composant silane, dans lequel

    - le composant copolyester est constitué à raison de 3 à 35 % en moles d'une unité monomère portant des groupes sulfonate, et est présent dans le revêtement séché en une proportion de 40 - 85 % en poids, et **caractérisé en ce que**
    - le composant silane porte des groupes vinyle ou des groupes méthacryle, ainsi que des groupes alcoxy, et est présent dans le revêtement séché à raison de 15 - 60 % en poids ; et
    - le revêtement présente une épaisseur de 5 - 170 nm ; et
    - la dispersion du revêtement contient 0,3 - 3 % en poids du composant silane.

2. Film de polyester selon la revendication 1, dans lequel le film est multicouche.

3. Film de polyester selon l'une des revendications 1 à 2, dans lequel la dispersion aqueuse ne contient pas de composants portant une fonction époxy.

**4.** Film de polyester selon l'une des revendications 1 à 3, dans lequel le copolyester dans le revêtement contient, dans la partie acide dicarboxy-lique, des unités qui sont dérivées de l'acide 5-sulfoisophtalique.

**5.** Film de polyester selon l'une des revendications 1 à 4, dans lequel le copolyester dans le revêtement contient, dans la partie acide dicarboxy-lique, des unités qui sont dérivées de l'acide téréphtalique et/ou de l'acide isoph-talique.

**6.** Film de polyester selon l'une des revendications 1 à 5, dans lequel la température de transition vitreuse du copolyester dans le revêtement est > 35 °C.

**7.** Film de polyester selon l'une des revendications 1 à 6, dans lequel le silane portant des groupes vinyle ou des groupes méthacryle a la formule générale :

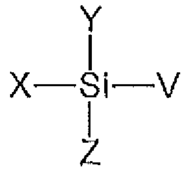

dans laquelle

X, Y, Z, indépendamment les uns des autres, sont identiques ou différents et représentent $CH_3$-$CO_2$- ou $(CH_3$-$(CH_2)_n)_m$-$CH_p$-O-, avec

$$n = 0\text{-}4,$$

$$m = 3\text{-}p,$$

$$p = 0\text{-}2$$

et
V est un radical portant au moins un groupe vinyle.

**8.** Film de polyester selon l'une des revendications 1 à 6, dans lequel le silane portant des groupes vinyle ou des groupes méthacryle a la formule générale :

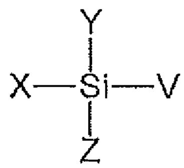

dans laquelle

X, Y, Z, indépendamment les uns des autres, sont identiques ou différents et représentent $CH_3$-$CO_2$- ou $(CH_3$-$(CH_2)_n)_m$-$CH_p$-O-, avec

$$n = 0\text{-}4,$$

$$m = 3\text{-}p,$$

$$p = 0\text{-}3$$

et

V est un radical portant au moins un groupe vinyle.

**9.** Film de polyester selon l'une des revendications 1 à 8, dans lequel la dispersion aqueuse contient au moins 0,3 % en poids de composant silane et/ou 0,3 % en poids de composant copolyester.

**10.** Film de polyester selon l'une des revendications 1 à 9, dans lequel la teneur en % en poids en composant silane est inférieure à celle du composant copolyester.

**11.** Procédé de fabrication d'un film de polyester selon la revendication 1, dans lequel le polyester ou le mélange de polyesters de la couche ou, dans le cas de films multicouches, des couches individuelles est comprimé et liquéfié dans une ou plusieurs extrudeuses, la ou les masses fondues obtenues sont mises en forme en un film fondu plat dans une filière monocouche ou multicouche, extrudées à travers une filière plate et étirées sur un rouleau de refroidissement et un ou plusieurs rouleaux de tirage, le film fondu refroidi et solidifié est orienté biaxialement, et est revêtu en ligne avant, pendant ou après l'orientation biaxiale avec une dispersion aqueuse, la dispersion comprenant, outre l'eau, au moins un composant copolyester et un composant silane, dans lequel

- le composant copolyester est constitué à raison de 3 à 35 % en moles d'une unité monomère portant des groupes sulfonate, et est présent dans le revêtement séché en une proportion de 40 - 85 % en poids,
**caractérisé en ce que**
- le composant silane porte des groupes vinyle ou des groupes méthacryle, ainsi que des groupes alcoxy, et est présent dans le revêtement séché à raison de 15 - 60 % en poids,
puis le film revêtu est thermofixé, relaxé et enroulé et
- le revêtement présente une épaisseur de 5 - 170 nm ;
et
- la dispersion du revêtement contient 0,3 - 3 % en poids du composant silane.

**12.** Utilisation d'un film selon la revendication 1 pour l'impression à partir de systèmes d'encre aqueux et contenant des solvants.

**13.** Utilisation selon la revendication 12 pour l'impression avec des encres d'impression UV.

**14.** Utilisation d'un film selon la revendication 1, pour la fabrication de films métallisés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10035327 A1
- EP 0322529 A1
- EP 0144878 A
- US 5350601 A
- EP 1197327 A


### In der Beschreibung aufgeführte Nicht-Patentliteratur


- **SCHRIFT**. *Geniosil - Organofunktionelle Silane von Wacker*, 2018, https://www.wacker.com/cms/media/publications/downloads/6085_DE.pdf